# EUROPÄISCHE PATENTSCHRIFT

(11) **EP 2 786 856 B1**
(45) Veröffentlichungstag und Bekanntmachung des Hinweises auf die Patenterteilung: **18.05.2016**
(21) Anmeldenummer: 13162316.7
(22) Anmeldetag: 04.04.2013
(51) Int. Cl.: B29C 51/26, B29C 51/38

(54) **VORRICHTUNG UND VERFAHREN ZUM HERSTELLEN VON KUNSTSTOFFBEHÄLTERN**
DEVICE AND METHOD FOR MANUFACTURING PLASTIC CONTAINERS
DISPOSITIF ET PROCÉDÉ DE FABRICATION DE RÉCIPIENTS EN PLASTIQUE

(43) Veröffentlichungstag der Anmeldung: 08.10.2014
(73) Patentinhaber: Magna Steyr Fuel Systems GesmbH, 8261 Sinabelkirchen (AT)
(72) Erfinder: Pozgainer, Günther, 8045 Graz (AT); Spary, Bernhard, 8302 Nestelbach bei Graz (AT)
(74) Vertreter: Zangger, Bernd

(56) Entgegenhaltungen:
- WO-A1-2005/011455
- DD-A1- 114 546
- DE-B- 1 147 029
- FR-A- 412 649
- US-A- 6 113 382

## Beschreibung

### Gebiet der Erfindung

Die vorliegende Erfindung betrifft eine Vorrichtung zum Herstellen von Kunststoffbehältern, insbesondere von Kunststofftanks beispielsweise Kraftstofftanks von Kraftfahrzeugen. Weiters betrifft die vorliegende Erfindung ein Verfahren zum Herstellen von Kunststoffbehältern, insbesondere von Kunststofftanks.

### Stand der Technik

Für das Herstellen von Kunststoffbehältern, insbesondere Kunststofftanks, ist es bekannt das Verfahren Thermoformen und dem entsprechend Thermoformpressen einzusetzen. Es ist weiters das sogenannte Doppellage-Thermoformen oder Doppelform-Thermoformen bekannt, bei welchem in zwei Formen gleichzeitig Kunststoffhalbschalen thermogeformt werden, die anschließend im heißen und pastösen Zustand an ihren Rändern miteinander zu einem Hohlkörper verschweißt werden.

Ein Verfahren zum Doppellagen-Thermoformen von Kunststoff-Kraftstofftanks und eine Vorrichtung zum Herstellen von Kunststoff-Kraftstofftanks ist aus der WO 2004/062889 A1 bekannt, wobei zwei erhitzte Kunststoff-Lagen unabhängig voneinander zu einer ThermoformStation bewegt werden, wobei die einzelnen Kunststoff-Lagen in ein erstes und zweites formgebendes Gesenk abgesenkt werden, wobei das erste und zweite Gesenk seitlich nebeneinander angeordnet sind, wobei jede Kunst-stoff-Lage zu einer Schale thermogeformt wird und wobei eines der formgebenden Gesenke mit der thermogeformten Schale umgedreht wird und über dem anderen Gesenk angeordnet wird und schließlich überlappende Dichtungsgebiete der Schalen zusammengepresst und thermisch verschmolzen werden.

Aus der EP 1 314 528 A2 ist eine Thermoform-Presse zur Herstellung von geformten Teilen bekannt, umfassend einen Formauflagetisch der an einem Rahmen unterhalb einer Umformgesenkbaugruppe aufgehängt ist und ein Paar Formen, die Seite an Seite auf dem Formauflagetisch montiert sind, wobei Mittel zum Schwenken des genannten Formauflagetischs über einen bogenförmigen Pendelweg und zum abwechselnden Ausrichten und Registrieren der einen der genannten Formen und dann der anderen der genannten Formen mit der Umformgesenkbaugruppe vorgesehen sind.

Aus der FR 412 649 A ist eine Vorrichtung zur Erzeugung hohler Objekte wie Bälle aus Kautschuk bekannt.

Die WO 2005/011455 A1 offenbart eine Methode zur Erzeugung von zusammengesetzten Bauteilen wie Duschwannen.

Aus der DD 114 546 A1 ist ein Verfahren zur Herstellung von Großsektionen in Sandwichbauweise mit einem Hartschaumstoffstützkern, insbesondere für Schienenfahrzeugaufbauten, bekannt.

Die US 6 113 382 A offenbart eine Presse für Kunststoffteile mit einer oberen und einer unteren Formhälfte.

### Zusammenfassung der Erfindung

Es ist eine Aufgabe der Erfindung, eine verbesserte Vorrichtung und ein verbessertes Verfahren zum Herstellen von Kunststoffbehältern anzugeben, wodurch insbesondere eine energieschonende Herstellung der Kunststoffbehälter gewährleistet wird.

Die Lösung der Aufgabe erfolgt durch eine Vorrichtung nach Anspruch 1.

Die Lösung der Aufgabe erfolgt auch durch ein Verfahren zum Herstellen von Kunststoffbehältern nach Anspruch 13.

Erfindungsgemäß ist demnach eine Federvorrichtung vorgesehen, durch welche die Schwenkbewegung des Schwenkarmes zumindest unterstützt werden kann, wenn zur Aktuierung der Schwenkbewegung eine weitere Vorrichtung wie etwa ein Getriebemotor vorgesehen ist. Idealerweise wird die Schwenkbewegung zwischen der ersten Position und der zweiten Position des Schwenkarmes in beiden Schwenkrichtungen durch die Federvorrichtung unterstützt, es ist aber erfindungsgemäß auch eine Federvorrichtung einsetzbar, die nur in einer der beiden Schwenkrichtungen des Schwenkarms unterstützt. Die Federvorrichtung wird durch das üblicherweise hohe Gewicht des Schwenkarmes mitsammen zumindest einer darauf befindlichen Formhälfte beim Senken des Schwenkarmes so vorgespannt, dass sie ein darauf folgendes Heben des Schwenkarmes erleichtert.

Weiterbildungen der Erfindung sind in den abhängigen Ansprüchen, der Beschreibung sowie den beigefügten Zeichnungen angegeben.

Bevorzugt ist die Federvorrichtung eine hydropneumatische oder mechanische Federvorrichtung. Insbesondere eine hydropneumatische Federvorrichtung weist optimale Eigenschaften, wie eine hohe Federungselastizität auf und kann zudem sowohl passiv (bei konstantem Druck) als auch aktiv (bei gesteuertem Druck) betrieben werden.

Bevorzugt umfasst die Federvorrichtung einen Hydraulikzylinder und einen Druckspeicher. Ein Ende des Hydraulikzylinders kann derart mit dem Schwenkarm verbunden sein, dass durch Ausfahren des Hydraulikzylinders eine oszillierende Drehbewegung des Schwenkarmes unterstützt wird.

Der Druckspeicher kann insbesondere teilweise mit einem Gas, wie Stickstoff unter hohem Druck, gefüllt sein und teilweise mit einem Hydraulikfluid, wobei zwischen dem Gas und dem Hydraulikfluid im Druckspeicher eine Membran angeordnet ist. Derartige Druckspeicher werden auch als "Federkugel" bezeichnet.

Bevorzugt umfasst die Federvorrichtung auch eine Hydraulikpumpe. Durch die Hydraulikpumpe kann ein Hydraulikfluid permanent dem Druckspeicher unter einem konstanten Druck zugeführt werden, oder auch mit einem steuerbaren Druck, so dass beispielsweise durch die Kurbelbewegung des Hydraulikzylinders oder durch Gasexpansion im Druckspeicher entstehende Ungleichmäßigkeiten ausgeglichen werden können.

Bevorzugt weist die Federvorrichtung eine Dämpfung auf, um Resonanzschwingungen des Schwenkarms zu verhindern.

Der Schwenkarm kann beispielsweise durch einen Getriebemotor zwischen der ersten Position und der zweiten Position schwenkbar sein oder durch einen Hydraulikmotor.

Alternativ kann der Schwenkarm allein durch die Kraft einer aktiv gesteuerten Federvorrichtung zwischen der ersten Position und der zweiten Position schwenkbar sein. Durch Schwung kommt der Schwenkarm durch den Totpunkt bei 90 Grad.

Bevorzugt umfasst der Schwenkarm einen Schwenkarmständer und einen schwenkbaren Schwenktisch, der die zweite Formhälfte trägt. Im Rahmen dieser Patentschrift ist mit einer Schwenkbewegung des Schwenkarmes dann eine Schwenkbewegung des schwenkbaren Schwenktisches des Schwenkarmes gemeint.

Bevorzugt ist der Hydraulikzylinder an seinem ersten Ende, bevorzugt dem unteren Ende, am Schwenkarmständer gelagert und an seinem zweiten Ende, bevorzugt dem oberen Ende, mit dem Schwenktisch verbunden.

Erfindungsgemäß umfasst die Vorrichtung einen zweiten Presstisch mit einer dritten Formhälfte und der Schwenkarm weist eine vierte Formhälfte auf, wobei in der dritten und der vierten Formhälfte erhitzte und thermogeformte Kunststoffhalbschalen aufnehmbar sind, wobei bei der zweiten Position des Schwenkarms, über dem zweiten Presstisch, die dritte und die vierte Formhälfte zueinander hin offen sind, so dass durch Pressen der dritten Formhälfte auf die vierte Formhälfte die darin aufgenommenen Kunststoffhalbschalen an ihren überlappenden Rändern miteinander verschweißbar sind.

Erfindungsgemäß ist vorgesehen zwei Presstische zu verwenden, an welchen jeweils eine Formhälfte angeordnet ist. Die beiden zugehörigen Formhälften die die Formhälften an den Presstischen ergänzen, sind an dem gemeinsamen Schwenkarm angeordnet. Auf diese Weise kann durch eine einzige Schwenkbewegung des Schwenkarms ein Formpaar, beispielsweise die erste und zweite Formhälfte, einander angenähert und in eine Position zum Verschweißen gebracht werden und gleichzeitig ein zweites Formpaar, beispielsweise die dritte und vierte Formhälfte, zur Entnahme des verschweißten Behälters geöffnet werden. Auch können somit während ein Formpaar geschlossen ist und der verschweißte Behälter darin abkühlt bereits gleichzeitig in die Formhälften des anderen Formpaares erhitzte Kunststoffplatten eingebracht und zu Kunststoffhalbschalen thermogeformt werden. Die Schwenkbewegungen des Schwenkarmes der zwischen einer Position über dem ersten Presstisch und einer Position über dem zweiten Presstisch hin und her geschwenkt werden kann, werden durch die erfindungsgemäße Federvorrichtung unterstützt.

Bevorzugt ist die erste Formhälfte und/oder die zweite Formhälfte und/oder gegebenenfalls die dritte Formhälfte und/oder gegebenenfalls die vierte Formhälfte als Thermoformstation ausgebildet, so dass in die jeweilige Formhälfte eine erhitzte Kunststoffplatte einbringbar ist und aus der Kunststoffplatte die Kunststoffhalbschale in der jeweiligen Formhälfte thermogeformt wird.

Besonders bevorzugt sind die Thermoformstationen als Vakuumthermoformstationen ausgebildet, so dass die Kunststoffplatten durch ein Vakuum in die jeweiligen Formhälften gezogen werden.

Bevorzugt sind die zweite Formhälfte und die dritte Formhälfte an gegenüberliegenden Seiten des Schwenkarms angeordnet, so dass die Öffnungen der Formhälften jeweils vom Schwenkarm weg weisen.

Der Schwenkarm ist bevorzugt etwa in der Mitte zwischen dem ersten Presstisch und dem zweite Presstisch gelagert und wird zwischen der ersten Position und der zweiten Position um etwa 180 Grad vertikal geschwenkt.

Die Presse des ersten und/oder des zweiten Presstisches wird bevorzugt mechanisch, hydraulisch und/oder hydropneumatisch betrieben. Insbesondere kann eine oder bevorzugt beide Pressen zumindest zweistufig betrieben werden, beispielsweise in einer Schnelllaufphase mit höherer Schließgeschwindigkeit und geringerer Schließkraft und einer Kraftphase mit höherer Schließkraft. Dabei kann beispielsweise die Schnelllaufphase mechanisch und die Kraftphase hydraulisch angetrieben sein.

In einem erfindungsgemäßen Verfahren zum Herstellen von Kunststoffbehältern werden erhitzte Kunststoffplatten in einer ersten nach oben offenen Formhälfte und einer zweiten nach oben offenen Formhälfte eingebracht und in der ersten und zweiten Formhälfte die Kunststoffplatten zu Kunststoffhalbschalen thermogeformt, wobei die erste Formhälfte an einem ersten Presstisch angeordnet ist und die zweite Formhälfte an einem Schwenkarm angeordnet ist, wobei sich der Schwenkarm zunächst in einer zweiten Position befindet, in welcher die erste und zweite Formhälfte nebeneinander angeordnet und nach oben offen sind, wobei der Schwenkarm in eine erste Position über dem ersten Presstisch gebracht wird in welcher die erste und die zweite Formhälfte zueinander hin offen sind, wobei danach durch Pressen der ersten Formhälfte auf die zweite Formhälfte die darin aufgenommenen Kunst-stoffhalbschalen an ihren überlappenden Rändern miteinander verschweißt werden, wobei die Schwenkbewegung des Schwenkarms zwischen der ersten und der zweiten Position durch eine Federvorrichtung unterstützt wird, die das Gewicht des Schwenkarms für das Heben des Schwenkarms ausnützt.

Erfindungsgemäß werden erhitzte Kunststoffplatten auch in einer dritten nach oben offenen Formhälfte und einer vierten nach oben offenen Formhälfte eingebracht und in der dritten und vierten Formhälfte die Kunststoffplatten zu dritten und vierten Kunststoffhalbschalen thermogeformt, wobei die dritte Formhälfte an einem zweiten Presstisch angeordnet ist und die vierte Formhälfte am Schwenkarm angeordnet ist, wobei, insbesondere nach dem Thermoformen, der Schwenkarm in die zweite Position über dem zweiten Presstisch gebracht wird in welcher die dritte und die vierte Formhälfte zueinander hin offen sind, wobei danach durch Pressen der dritten Formhälfte auf die vierte Formhälfte die darin aufgenommenen Kunststoffhalbschalen an ihren überlappenden Rändern miteinander verschweißt werden.

Kunststoffplatten können in die erste und zweite Formhälfte eingebracht werden und bevorzugt auch thermogeformt werden, während miteinander verschweißte Kunststoffhalbschalen in der dritten und vierten Formhälfte abkühlen. Kunststoffplatten können auch in die dritte und vierte Formhälfte eingebracht werden und bevorzugt auch thermogeformt werden während miteinander verschweißte Kunststoffhalbschalen in der ersten und zweiten Formhälfte abkühlen. Bevorzugt wird so abwechselnd der Kunststoff in einem Formpaar vorbereitet und thermogeformt während ein Behälter im anderen Formpaar abkühlt.

Besonders bevorzugt werden die Kunststoffplatten in der ersten Formhälfte und/oder der zweiten Formhälfte und/oder gegebenenfalls der dritten Formhälfte und/oder gegebenenfalls der vierten Formhälfte zum Thermoformen durch ein Vakuum in die jeweiligen Formhälften gezogen.

Vorzugsweise können Einlegeteile nach dem Thermoformen der Kunststoffhalbschalen und vor dem paarweisen Verschweißen der Kunststoffhalbschalen in die erste und/oder zweite und/oder dritte und/oder vierte Formhälfte eingebracht werden. Einlegeteile können beispielsweise auch vor dem Thermoformen in die Kunststoffhalbschalen eingebracht werden.

Besonders bevorzugt wird der Schwenkarm bzw. der schwenkbare Schwenktisch des Schwenkarms, der die zweite und vierte Formhälfte trägt, vor dem Pressen in seiner Position verriegelt, beispielsweise mechanisch, zum Beispiel durch einen Bolzen welcher in eine Bohrung treibbar ist, durch eine Klinke oder Drehfalle, oder auch elektrisch, hydraulisch oder pneumatisch, so dass der verriegelte Schwenkarm den Kräften beim Pressen standhalten kann.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer erfindungsgemäßen Vorrichtung zum Herstellen von Kunststoffbehältern.
- Fig. 2: ist eine schematische Darstellung einer erfindungsgemäßen Vorrichtung zum Herstellen von Kunststoffbehältern.
- Fig. 3: ist eine schematische Darstellung der Federunterstützung einer erfindungsgemäßen Vorrichtung.
- Fig. 4: ist ein Diagramm von Drehmomentverläufen für einen Schwenkarm ohne Federunterstützung.
- Fig. 5: ist ein Diagramm von Drehmomentverläufen für einen Schwenkarm mit Federunterstützung.
- Fig. 6 - Fig. 11: zeigen ein erfindungsgemäßes Verfahren zum Herstellen von Kunststoffbehältern.
- Fig. 12: ist eine Vorderansicht einer weiteren erfindungsgemäßen Vorrichtung zum Herstellen von Kunststoffbehältern.
- Fig. 13: ist eine Rückansicht der Vorrichtung gemäß Fig. 12.

### Detaillierte Beschreibung der Erfindung

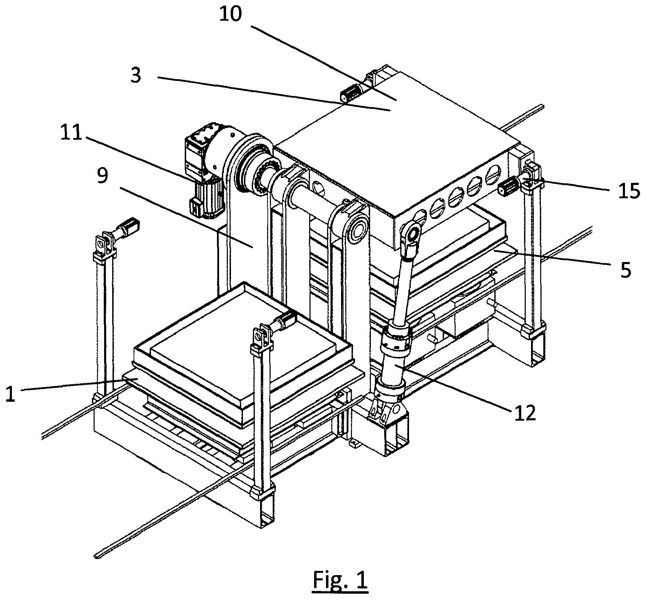

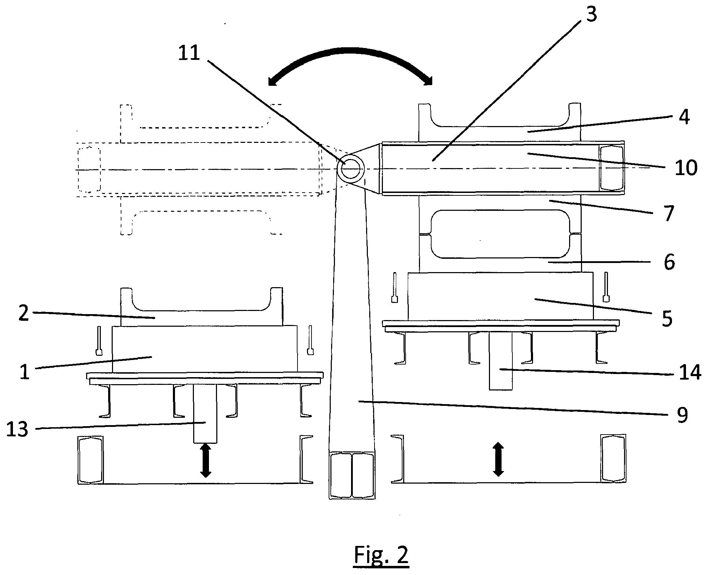

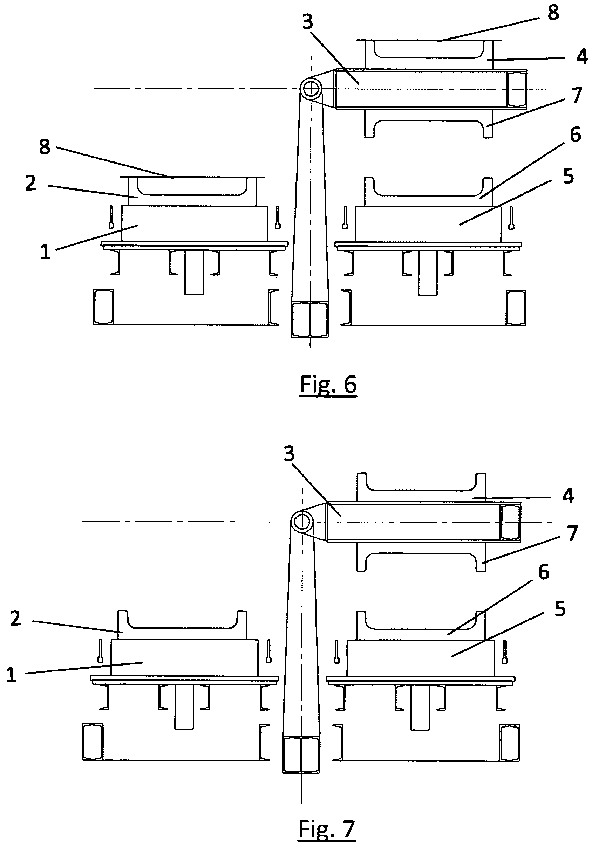

In den Fig. 1 und 2 ist eine erfindungsgemäße Vorrichtung zum Herstellen von Kunststoffbehältern dargestellt, wobei die Vorrichtung einen ersten Presstisch 1 und einen zweiten Presstisch 5 umfasst und einen Schwenkarm 3 zwischen den beiden Presstischen 1, 5. Der Schwenkarm 3 besteht aus einem Schwenkarmständer 9 und einem Schwenktisch 10, der auf dem Schwenkarmständer 9 schwenkbar gelagert ist. Der erste und der zweite Presstisch 1, 5 gehören zu einer Presse 13 bzw. 14. Auf dem ersten Presstisch 1 ist eine erste Formhälfte 2 angeordnet (in Fig. 1 sind die Formhälften nicht dargestellt), die zusammen mit einer zweiten Formhälfte 4, welche am Schwenkarm 3 auf derjenigen Seite des Schwenktisches 10 angeordnet ist, die dem ersten Presstisch 1 zugewandt ist, ein zusammenwirkendes Formpaar bildet. In der ersten und der zweiten Formhälfte 2, 4 können erhitzte und thermogeformte Kunststoffhalbschalen aufgenommen werden. Dazu werden, wie im Verfahren gemäß der Figuren 6-11 dargestellt, annähernd eben gehaltene Kunststoffplatten 8 auf die Formhälften 2 und 4 aufgelegt und in den Formhälften 2, 4 thermogeformt. Die Vorrichtung weist darüber hinaus auf dem zweiten Presstisch 5 eine dritte Formhälfte 6 auf und der Schwenkarm 3 weist eine vierte Formhälfte 7 auf, wobei auch in der dritten und der vierten Formhälfte 6, 7 erhitzte und thermogeformte Kunststoffhalbschalen aufnehmbar sind. In Fig. 1 und Fig. 2 ist der Schwenkarm 3 jeweils in einer zweiten Position des Schwenkarms 3 dargestellt, in welcher die dritte und die vierte Formhälfte 6, 7 zueinander hin offen sind, so dass durch Pressen der dritten Formhälfte 6 auf die vierte Formhälfte 7 die darin aufgenommenen erhitzen, pastösen Kunststoffhalbschalen an ihren überlappenden Rändern miteinander verschweißt werden können um einen geschlossenen Kunststoffbehälter 20 zu bilden.

Wie in Fig. 1 dargestellt, wird der Schwenkarm 3, bzw. dessen Schwenktisch 10, primär über einen Getriebemotor 11 aktuiert. Die Schwenkbewegung des Schwenkarms 3 wird dabei von einer hydropneumatischen Federvorrichtung 12 unterstützt, so dass der Getriebemotor 11 geringer dimensioniert werden kann. Der Schwenktisch 10 kann mittels Verriegelungen 15 in einer horizontalen Position festgelegt werden, damit dieser den Kräften beim Pressen der Formhälften aufeinander standhällt.

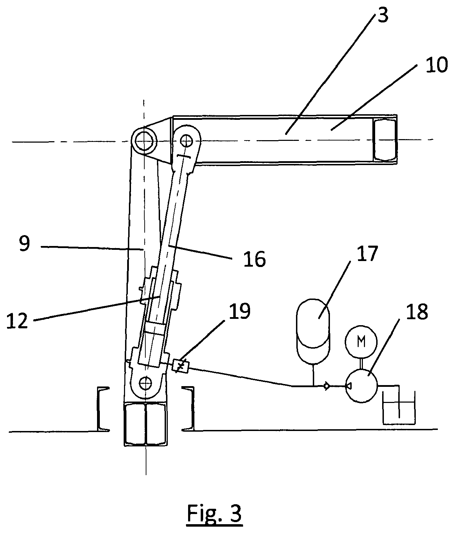

Fig. 3 ist eine schematische Darstellung der Federunterstützung einer erfindungsgemäßen Vorrichtung. Die Unterstützung der Schwenkbewegung eines Schwenkarmes 3 erfolgt durch eine hydropneumatische Federvorrichtung 12, die einen Hydraulikzylinder 16 verwendet, durch welchen ein Schwenktisch 10 bewegbar ist. Ein Hydraulikfluid ist dazu in einem Druckspeicher 17 gespeichert. Durch eine Abwärtsbewegung des Schwenktisches 10 wird über den Hydraulikzylinder 16 das Hydraulikfluid in den Druckspeicher 17 gepresst und baut somit einen Druck auf, der für ein anschließendes Heben des Schwenktisches 10 genutzt werden kann. Der Druck des Hydraulikfluids kann auch aktiv gesteuert werden, beispielsweise über eine Hydraulikpumpe 18. Um Resonanzschwingungen des Schwenkarms 3 zu verhindern, ist bevorzugt eine Dämpfung 19 der Federvorrichtung 12 vorgesehen.

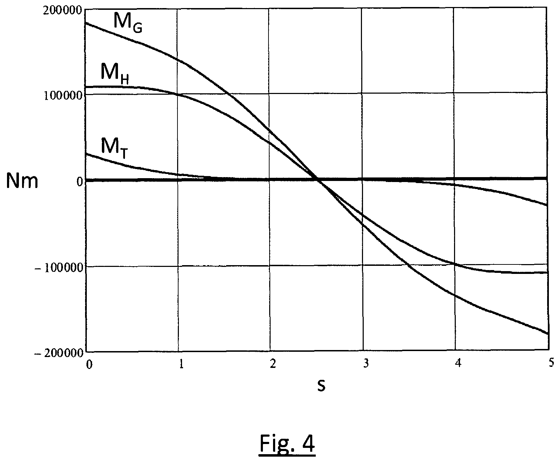

Fig. 4 zeigt ein Diagramm von Drehmomentverläufen für einen Schwenkarm ohne Federunterstützung. Dabei sind Drehmomente in Newtonmeter an der y-Achse eingezeichnet und ein zeitlicher Verlauf in Sekunden während einer Schwenkbewegung (Heben + Senken des Schwenkarmes bzw. des Schwenktisches) auf der x-Achse. Dabei ist M_{H} das erforderliche Drehmoment zum Heben des Gewichts des gesamten Schwenktisches inkl. Formhälften, M_{T} ist das zusätzlich erforderliche Drehmoment zum Überwinden des Trägheitsmoments beim Beschleunigen und Abbremsen des gesamten Schwenktisches. Die Summe der erforderlichen Drehmomente M_{H} und M_{T} ergibt das erforderliche Drehmoment M_{G} dass durch einen Getriebemotor (oder einen anderen Antrieb) aufzubringen ist. Zunächst ist zum Beschleunigen und Heben des Schwenktisches ein hohes Drehmoment erforderlich (links im Diagramm), nach dem Überwinden der höchsten Stellung des Schwenktisches (vertikal) muss eine entsprechende Bremskraft aufgebracht werden (rechts im Diagramm). Die Energie die für das Heben aufgebracht werden muss ist nach dem Heben des Schwenktisches verloren, ebenso die Energie die für das Bremsen aufgebracht werden nach dem Abbremsen des Schwenktisches.

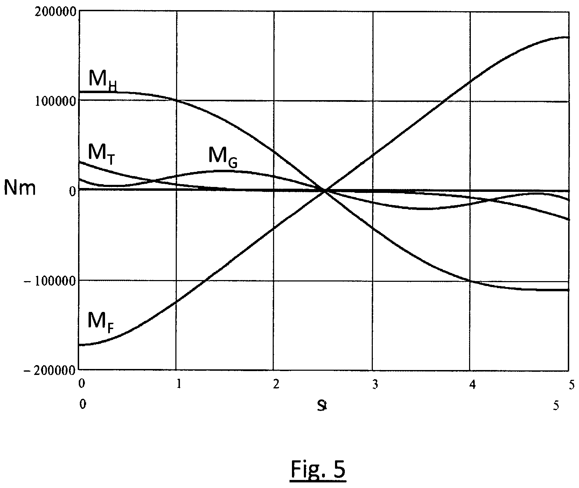

Fig. 5 zeigt ein Diagramm entsprechend Fig. 4, jedoch für einen Schwenkarm mit Federunterstützung. Zusätzlich zu den in Fig. 4 beschriebenen erforderlichen Drehmomenten M_{H} und M_{T} wirkt nun das Drehmoment das eine beispielsweise hydropneumatische Federvorrichtung durch deren Vorspannung aufbringt, M_{F}. Durch das von der Federvorrichtung aufgebrachte Drehmoment M_{F} wird das letztlich durch den Getriebemotor für das Heben und Bremsen aufzubringende Drehmoment M_{G} deutlich reduziert, beispielsweise auf ca. 15 Prozent des Wertes ohne Unterstützung durch die Federvorrichtung.

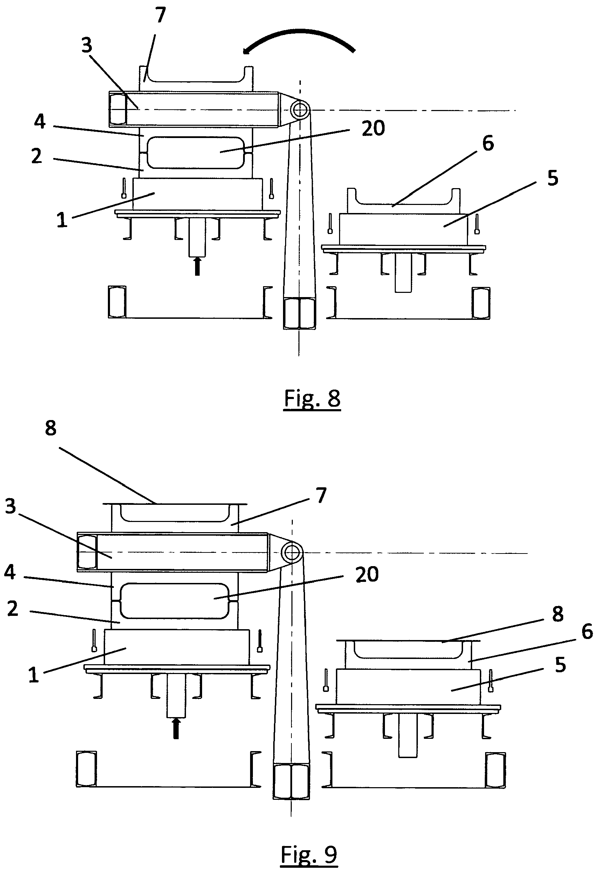

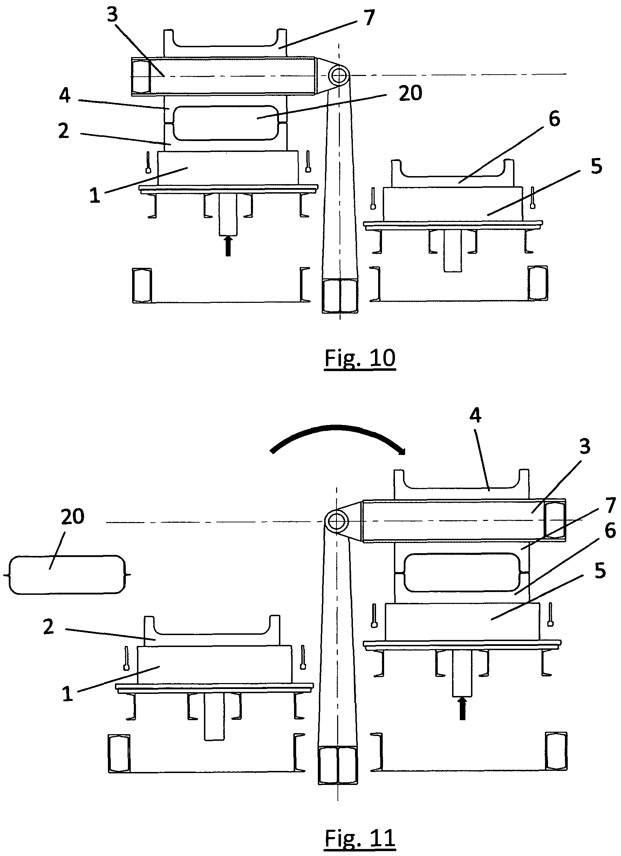

Fig. 6 bis Fig. 11 zeigen ein erfindungsgemäßes Verfahren zum Herstellen von Kunststoffbehältern in verschiedenen Verfahrensschritten. Zunächst befindet sich, in Fig. 6, der Schwenkarm 3 der Vorrichtung noch in der zweiten Position, in welcher sich die Öffnungen der dritten und vierten Formhälfte 6, 7 gegenüberstehen. Die Öffnungen der ersten Formhälfte 2 und der zweiten Formhälfte 4 weisen nach oben, so dass vorgewärmte Kunststoffplatten 8 aufgelegt werden können und an deren Rändern mit geeigneten Dichtrahmen zu den Formhälften abgedichtet werden können. Daraufhin werden, in Fig. 7, die Kunststoffplatten 8 in den Formhälften 2 und 4 durch ein Vakuum thermogeformt, so dass sie in die Formhälften 2 und 4 gezogen werden. Daraufhin können Einlegeteile in die geformten Kunststoffschalen eingebracht und an diesen befestigt, insbesondere verschweißt werden. Im nächsten Schritt, dargestellt in Fig. 8, wird der Schwenkarm 3 um 180 Grad in den Figuren nach links geschwenkt, so dass der Schwenkarm 3 die erste Position einnimmt, in welcher die Öffnungen der ersten und zweiten Formhälfte 2, 4 einander gegenüber liegen. Der erste Presstisch 1 fährt hoch und presst die beiden Kunststoffschalen zusammen, die so durch Druck und Hitze an ihren Rändern miteinander verschweißt werden um einen Kunststoffbehälter 20 zu bilden. Wie in Fig. 9 dargestellt, können daraufhin auf die nun nach oben offenen formhälften 6 und 7 wiederum vorgewärmte Kunststoffplatten 8 aufgelegt werden und am Rand mit geeigneten Dichtrahmen zu den Formhälften abgedichtet werden, während der Kunststoffbehälter 20 in der ersten und zweiten Formhälfte 2, 4 abkühlt. Die Kunststoffplatten 8 auf den dritten und vierten Formhälften 6, 7 werden nun, siehe Fig. 10, vakuumgeformt und wieder Einlegeteile in die Kunststoffschalen eingebracht und auf diesen verschweißt. Währenddessen kühlt der Kunststoffbehälter 20 in der ersten und zweiten Formhälfte 2, 4 weiter ab. Wie in Fig. 11 dargestellt, kann daraufhin der erste Presstisch 1 wieder gesenkt werden und der fertige Kunststoffbehälter 20 entnommen werden, während der Schwenkarm 3 wieder zurück zum zweiten Presstisch 5 geschwenkt wird und ein weiterer Behälter auf dieser zweiten Presse gepresst wird. Der dargestellte Prozess kann sich nun natürlich beliebig oft wiederholen. Bei jedem Schwenken des Schwenkarmes 3 wird ein weiterer fertiger Kunststoffbehälter 20 freigegeben. Die mit der ersten Presse 13 hergestellten Kunststoffbehälter 20 können mit den an der zweiten Presse 14 hergestellten Kunststoffbehältern 20 identisch sein, und somit mit höherem Durchsatz produziert werden. Es können jedoch auch verschiedene Formhälften an den Presstischen verwendet werden, so dass gleichzeitig zwei unterschiedliche Produkte hergestellt werden können.

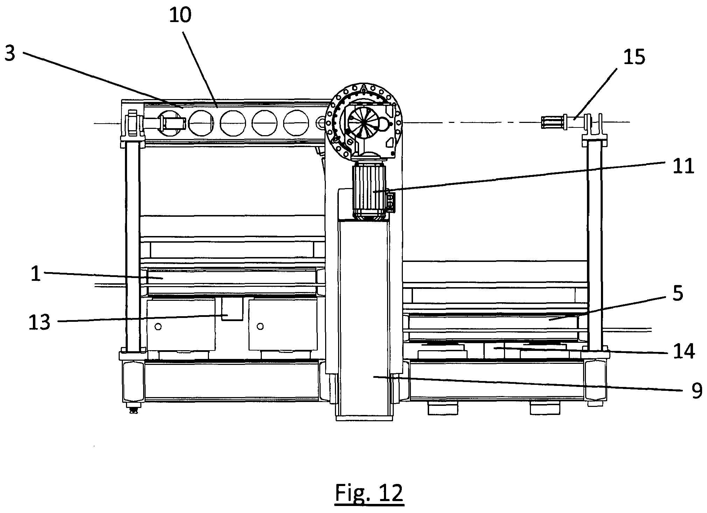

Fig. 12 ist eine Vorderansicht einer erfindungsgemäßen Vorrichtung zum Herstellen von Kunststoffbehältern, beispielsweise von der Seite der Behälterentnahme her.

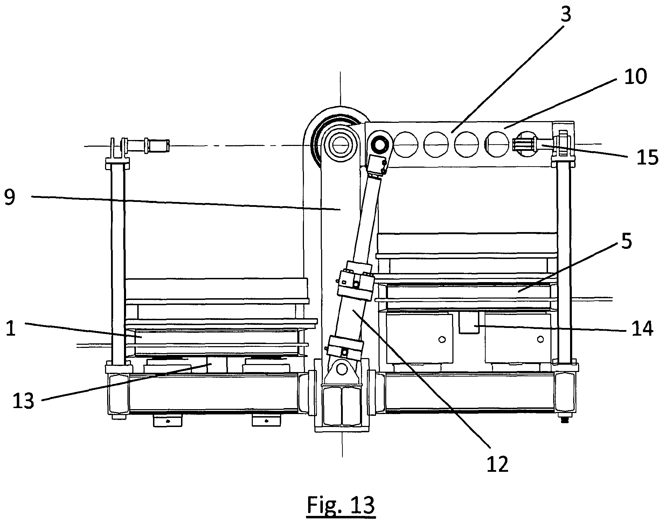

Fig. 13 ist eine Rückansicht der Vorrichtung gemäß Fig. 12, beispielsweise von der Seite der Zuführung der Kunststoffplatten her.

### Bezugszeichenliste

- 1: erster Presstisch
- 2: erste Formhälfte
- 3: Schwenkarm
- 4: zweite Formhälfte
- 5: zweiter Presstisch
- 6: dritte Formhälfte
- 7: vierte Formhälfte
- 8: Kunststoffplatte
- 9: Schwenkarmständer
- 10: Schwenktisch
- 11: Getriebemotor
- 12: Federvorrichtung
- 13: Presse
- 14: Presse
- 15: Verriegelung
- 16: Hydraulikzylinder
- 17: Druckspeicher
- 18: Hydraulikpumpe
- 19: Dämpfung
- 20: Kunststoffbehälter

- M_{H}: erforderliches Drehmoment zum Heben des Gewichts
- M_{T}: erforderliches Drehmoment zum Überwinden des Trägheitsmoments
- M_{G}: erforderliches Drehmoment von Getriebemotor
- M_{F}: von Federvorrichtung aufgebrachtes Drehmoment

## Patentansprüche

1. Vorrichtung zum Herstellen von Kunststoffbehältern, wobei die Vorrichtung einen ersten Presstisch (1) mit einer ersten Formhälfte (2) umfasst und einen Schwenkarm (3) mit einer zweiten Formhälfte (4), wobei in der ersten und der zweiten Formhälfte (2, 4) erhitzte und thermogeformte Kunststoffhalbschalen aufnehmbar sind, wobei bei einer ersten Position des Schwenkarms (3) über dem ersten Presstisch (1) die erste und die zweite Formhälfte (2, 4) zueinander hin offen sind, so dass durch Pressen der ersten Formhälfte (2) auf die zweite Formhälfte (4) die darin aufgenommenen Kunststoffhalbschalen an ihren überlappenden Rändern miteinander verschweißbar sind, wobei in einer zweiten Position des Schwenkarms (3) die erste und zweite Formhälfte (2, 4) nebeneinander angeordnet und nach oben offen sind,
**dadurch gekennzeichnet, dass** die Vorrichtung einen zweiten Presstisch (5) mit einer dritten Formhälfte (6) umfasst und der Schwenkarm (3) eine vierte Formhälfte (7) aufweist, wobei in der dritten und der vierten Formhälfte (6, 7) erhitzte und thermogeformte Kunststoffhalbschalen aufnehmbar sind, wobei bei der zweiten Position des Schwenkarms (3), über dem zweiten Presstisch (5), die dritte und die vierte Formhälfte (6, 7) zueinander hin offen sind, so dass durch Pressen der dritten Formhälfte (6) auf die vierte Formhälfte (7) die darin aufgenommenen Kunststoffhalbschalen an ihren überlappenden Rändern miteinander verschweißbar sind, wobei die Schwenkbewegung des Schwenkarms (3) zwischen der ersten und der zweiten Position durch eine Federvorrichtung (12) unterstützt wird, die das Gewicht des Schwenkarms (3) für das Heben des Schwenkarms (3) ausnützt.

2. Vorrichtung nach Anspruch 1,
**dadurch gekennzeichnet, dass** die Federvorrichtung (12) eine hydropneumatische oder mechanische Federvorrichtung (12) ist.

3. Vorrichtung nach Anspruch 1 oder 2,
**dadurch gekennzeichnet, dass** die Federvorrichtung (12) einen Hydraulikzylinder (16) und einen Druckspeicher (17) umfasst.

4. Vorrichtung nach Anspruch 3,
**dadurch gekennzeichnet, dass** die Federvorrichtung (12) eine Hydraulikpumpe (18) umfasst.

5. Vorrichtung nach zumindest einem der vorhergehenden Ansprüche, **dadurch gekennzeichnet, dass** die Federvorrichtung (12) eine Dämpfung (19) umfasst.

6. Vorrichtung nach zumindest einem der vorhergehenden Ansprüche, **dadurch gekennzeichnet, dass** der Schwenkarm (3) durch einen Getriebemotor (11) zwischen der ersten Position und der zweiten Position schwenkbar ist.

7. Vorrichtung nach zumindest einem der Ansprüche 1 bis 5,
**dadurch gekennzeichnet, dass** der Schwenkarm (3) allein durch die Federvorrichtung (12) zwischen der ersten Position und der zweiten Position schwenkbar ist.

8. Vorrichtung nach zumindest einem der vorhergehenden Ansprüche,
**dadurch gekennzeichnet, dass** der Schwenkarm (3) einen Schwenkarmständer (9) umfasst und einen schwenkbaren Schwenktisch (10), der die zweite Formhälfte (4) trägt.

9. Vorrichtung nach Anspruch 3 und 8,
**dadurch gekennzeichnet, dass** der Hydraulikzylinder (16) an seinem ersten Ende am Schwenkarmständer (9) gelagert ist und an seinem zweiten Ende mit dem Schwenktisch (10) verbunden ist.

10. Vorrichtung nach zumindest einem der vorhergehenden Ansprüche,
**dadurch gekennzeichnet, dass** die erste Formhälfte (2) und/oder die zweite Formhälfte (4) und/oder gegebenenfalls die dritte Formhälfte (6) und/oder gegebenenfalls die vierte Formhälfte (7) als Thermoformstation ausgebildet ist, so dass in die jeweilige Formhälfte (2, 4, 6, 7) eine erhitzte Kunststoffplatte (8) einbringbar ist und aus der Kunststoffplatte (8) die Kunststoffhalbschale in der jeweiligen Formhälfte (2, 4, 6, 7) thermogeformt wird.

11. Vorrichtung nach Anspruch 10,
**dadurch gekennzeichnet, dass** die Thermoformstationen als Vakuumthermoformstationen ausgebildet sind, so dass die Kunststoffplatten (8) durch ein Vakuum in die jeweiligen Formhälften (2, 4, 6, 7) gezogen werden.

12. Vorrichtung nach Anspruch 1,
**dadurch gekennzeichnet, dass** die zweite Formhälfte (4) und die dritte Formhälfte (6) an gegenüberliegenden Seiten des Schwenkarms (3) angeordnet sind, so dass die Öffnungen der Formhälften (4, 6) jeweils vom Schwenkarm (3) weg weisen.

13. Verfahren zum Herstellen von Kunststoffbehältern, wobei erhitzte Kunststoffplatten (8) in einer ersten nach oben offenen Formhälfte (2) und einer zweiten nach oben offenen Formhälfte (4) eingebracht werden und in der ersten und zweiten Formhälfte (2, 4) die Kunststoffplatten (8) zu Kunststoffhalbschalen thermogeformt werden, wobei die erste Formhälfte (2) an einem ersten Presstisch (1) angeordnet ist und die zweite Formhälfte (4) an einem Schwenkarm (3) angeordnet ist, wobei sich der Schwenkarm (3) zunächst in einer zweiten Position befindet, in welcher die erste und zweite Formhälfte (2, 4) nebeneinander angeordnet und nach oben offen sind, wobei der Schwenkarm (3) in eine erste Position über dem ersten Presstisch (1) gebracht wird in welcher die erste und die zweite Formhälfte (2, 4) zueinander hin offen sind, wobei danach durch Pressen der ersten Formhälfte (2) auf die zweite Formhälfte (4) die darin aufgenommenen Kunststoffhalbschalen an ihren überlappenden Rändern miteinander verschweißt werden,
**dadurch gekennzeichnet, dass** danach erhitzte Kunststoffplatten (8) in einer dritten nach oben offenen Formhälfte (6) und einer vierten nach oben offenen Formhälfte (7) eingebracht werden und in der dritten und vierten Formhälfte (6, 7) die Kunststoffplatten (8) zu Kunststoffhalbschalen thermogeformt werden, wobei die dritte Formhälfte (6) an einem zweiten Presstisch (5) angeordnet ist und die vierte Formhälfte (7) am Schwenkarm (3) angeordnet ist, wobei der Schwenkarm (3) in die zweite Position über dem zweiten Presstisch (5) gebracht wird in welcher die dritte und die vierte Formhälfte (6, 7) zueinander hin offen sind, wobei danach durch Pressen der dritten Formhälfte (3) auf die vierte Formhälfte (4) die darin aufgenommenen Kunststoffhalbschalen an ihren überlappenden Rändern miteinander verschweißt werden, wobei die Schwenkbewegung des Schwenkarms (3) zwischen der ersten und der zweiten Position durch eine Federvorrichtung (12) unterstützt wird, die das Gewicht des Schwenkarms (3) für das Heben des Schwenkarms (3) ausnützt.

14. Verfahren nach Anspruch 13,
**dadurch gekennzeichnet, dass** die Kunststoffplatten in der ersten Formhälfte (2) und/oder der zweiten Formhälfte (4) und/oder gegebenenfalls der dritten Formhälfte (6) und/oder gegebenenfalls der vierten Formhälfte (7) zum Thermoformen durch ein Vakuum in die jeweiligen Formhälften (2, 4, 6, 7) gezogen werden.

## Claims

1. Device for producing plastics containers, wherein the device comprises a first press table (1) with a first mould half (2) and comprises a pivot arm (3) with a second mould half (4), wherein heated and thermoformed plastics half-shells can be received in the first and in the second mould half (2, 4), wherein, when the pivot arm (3) is in a first position over the first press table (1), the first and second mould halves (2, 4) are open toward one another such that, by virtue of the first mould half (2) being pressed onto the second mould half (4), the plastics half-shells received therein can be fused to one another at their overlapping edges, wherein, when the pivot arm (3) is in a second position, the first and second mould halves (2, 4) are arranged beside one another and are upwardly open,
**characterized in that** the device comprises a second press table (5) with a third mould half (6), and the pivot arm (3) has a fourth mould half (7), wherein heated and thermoformed plastics half-shells can be received in the third and in the fourth mould half (6, 7), wherein, when the pivot arm (3) is in the second position over the second press table (5), the third and the fourth mould halves (6, 7) are open toward one another such that, by virtue of the third mould half (6) being pressed onto the fourth mould half (7), the plastics half-shells received therein can be fused to one another at their overlapping edges, wherein the pivoting movement of the pivot arm (3) between the first and the second position is assisted by a spring device (12) which utilizes the weight of the pivot arm (3) for the lifting of the pivot arm (3).

2. Device according to Claim 1,
**characterized in that** the spring device (12) is a hydropneumatic or mechanical spring device (12).

3. Device according to Claim 1 or 2,
**characterized in that** the spring device (12) comprises a hydraulic cylinder (16) and a pressure accumulator (17).

4. Device according to Claim 3,
**characterized in that** the spring device (12) comprises a hydraulic pump (18).

5. Device according to at least one of the preceding claims,
**characterized in that** the spring device (12) comprises a damping means (19).

6. Device according to at least one of the preceding claims,
**characterized in that** the pivot arm (3) is pivotable between the first position and the second position by means of a geared motor (11).

7. Device according to at least one of Claims 1 to 5,
**characterized in that** the pivot arm (3) is pivotable between the first position and the second position by means of the spring device (12) alone.

8. Device according to at least one of the preceding claims,
**characterized in that** the pivot arm (3) comprises a pivot arm stand (9) and a pivotable pivot table (10) which bears the second mould half (4).

9. Device according to Claim 3 and 8,
**characterized in that** the hydraulic cylinder (16) is mounted at its first end on the pivot arm stand (9) and is connected at its second end to the pivot table (10).

10. Device according to at least one of the preceding claims,
**characterized in that** the first mould half (2) and/or the second mould half (4) and/or if appropriate the third mould half (6) and/or if appropriate the fourth mould half (7) is in the form of a thermoforming station, such that a heated plastics panel (8) can be inserted into the respective mould half (2, 4, 6, 7) and the plastics half-shell is thermoformed in the respective mould half (2, 4, 6, 7) from the plastics panel (8).

11. Device according to Claim 10,
**characterized in that** the thermoforming stations are in the form of vacuum-type thermoforming stations, such that the plastics panels (8) are pulled into the respective mould halves (2, 4, 6, 7) by a vacuum.

12. Device according to Claim 11,
**characterized in that** the second mould half (4) and the third mould half (6) are arranged on opposite sides of the pivot arm (3), such that the openings of the mould halves (4, 6) each point away from the pivot arm (3).

13. Method for producing plastics containers, wherein heated plastics panels (8) are inserted into a first, upwardly open mould half (2) and into a second, upwardly open mould half (4), and in the first and second mould halves (2, 4), the plastics panels (8) are thermoformed to form plastics half-shells, wherein the first mould half (2) is arranged on a first press table (1) and the second mould half (4) is arranged on a pivot arm (3), wherein the pivot arm (3) is initially situated in a second position in which the first and second mould halves (2, 4) are arranged beside one another and are upwardly open, wherein the pivot arm (3) is moved into a first position over the first press table (1), in which first position the first and second mould halves (2, 4) are open towards one another, wherein subsequently, by virtue of the first mould half (2) being pressed onto the second mould half (4), the plastics half-shells received therein are fused to one another at their overlapping edges, **characterized in that**, subsequently, heated plastics panels (8) are inserted into a third, upwardly open mould half (6) and into a fourth, upwardly open mould half (7), and in the third and fourth mould halves (6, 7), the plastics panels (8) are thermoformed to form plastics half-shells, wherein the third mould half (6) is arranged on a second press table (5) and the fourth mould half (7) is arranged on the pivot arm (3), wherein the pivot arm (3) is moved into the second position over the second press table (5), in which second position the third and fourth mould halves (6, 7) are open towards one another, wherein subsequently, by virtue of the third mould half (6) being pressed onto the fourth mould half (7), the plastics half-shells received therein are fused to one another at their overlapping edges, wherein the pivoting movement of the pivot arm (3) between the first and the second position is assisted by a spring device (12) which utilizes the weight of the pivot arm (3) for the lifting of the pivot arm (3).

14. Method according to Claim 13,
**characterized in that** the plastics panels in the first mould half (2) and/or in the second mould half (4) and/or if appropriate in the third mould half (6) and/or if appropriate in the fourth mould half (7) are pulled into the respective mould halves (2, 4, 6, 7) by a vacuum for thermoforming purposes.

## Revendications

1. Dispositif de fabrication de récipients en plastique, dans lequel le dispositif comprend une première table de presse (1) avec une première moitié de moule (2) et un bras pivotant (3) avec une deuxième moitié de moule (4), dans lequel des demi-coquilles en matière plastique chauffées et thermoformées peuvent être placées dans la première et dans la deuxième moitié de moule (2, 4), dans lequel, dans une première position du bras pivotant (3) au-dessus de la première table de presse (1), la première et la deuxième moitié de moule (2, 4) sont ouvertes l'une vers l'autre, de telle manière que, en pressant la première moitié de moule (2) sur la deuxième moitié de moule (4), les demi-coquilles de matière plastique contenues dans celles-ci puissent être soudées l'une à l'autre par leur bords qui se chevauchent, dans lequel les première et deuxième moitiés de moule (2, 4) sont disposées l'une à côté de l'autre et sont ouvertes vers le haut dans une deuxième position du bras pivotant (3), **caractérisé en ce que** le dispositif comprend une deuxième table de presse (5) avec une troisième moitié de moule (6) et le bras pivotant (3) présente une quatrième moitié de moule (7), dans lequel des demi-coquilles de matière plastique chauffées et thermoformées peuvent être placées dans la troisième et dans la quatrième moitié de moule (6, 7), dans lequel, dans la deuxième position du bras pivotant (3) au-dessus de la deuxième table de presse (5), la troisième et la quatrième moitié de moule (6, 7) sont ouvertes l'une vers l'autre, de telle manière que, en pressant la troisième moitié de moule (6) sur la quatrième moitié de moule (7), les demi-coquilles de matière plastique contenues dans celles-ci puissent être soudées l'une à l'autre par leurs bords qui se chevauchent, dans lequel le mouvement de pivotement du bras pivotant (3) entre la première et la deuxième position est assisté par un dispositif à ressort (12), qui utilise le poids du bras pivotant (3) pour le levage du bras pivotant (3).

2. Dispositif selon la revendication 1,
**caractérisé en ce que** le dispositif à ressort (12) est un dispositif à ressort (12) hydropneumatique ou mécanique.

3. Dispositif selon la revendication 1 ou 2, **caractérisé en ce que** le dispositif à ressort (12) comprend un cylindre hydraulique (16) et un accumulateur de pression (17).

4. Dispositif selon la revendication 3,
**caractérisé en ce que** le dispositif à ressort (12) comprend une pompe hydraulique (18).

5. Dispositif selon au moins une des revendications précédentes,
**caractérisé en ce que** le dispositif à ressort (12) comprend un amortissement (19).

6. Dispositif selon au moins une des revendications précédentes, **caractérisé en ce que** le bras pivotant (3) peut pivoter entre la première position et la deuxième position au moyen d'un moto-réducteur (11).

7. Dispositif selon au moins une des revendications 1 à 5,
**caractérisé en ce que** le bras pivotant (3) peut pivoter uniquement par le biais du dispositif à ressort (12) entre la première position et la deuxième position.

8. Dispositif selon au moins une des revendications précédentes, **caractérisé en ce que** le bras pivotant (3) comprend un pied de bras pivotant (9) et une table de pivotement pivotante (10), qui porte la deuxième moitié de moule (4).

9. Dispositif selon les revendications 3 et 8, **caractérisé en ce que** le cylindre hydraulique (16) est supporté au niveau de sa première extrémité sur le pied de bras pivotant (9) et est connecté au niveau de sa deuxième extrémité à la table pivotante (10).

10. Dispositif selon au moins une des revendications précédentes, **caractérisé en ce que** la première moitié de moule (2) et/ou la deuxième moitié de moule (4) et/ou facultativement la troisième moitié de moule (6) et/ou facultativement la quatrième moitié de moule (7) sont réalisées en tant que station de thermoformage, de telle manière qu'une plaque de matière plastique chauffée (8) puisse être placée dans la moitié de moule respective (2, 4, 6, 7) et que la demi-coquille de matière plastique soit thermoformée à partir de la plaque de matière plastique (8) dans la moitié de moule respective (2, 4, 6, 7).

11. Dispositif selon la revendication 10, **caractérisé en ce que** les stations de thermoformage sont réalisées en tant que stations de thermoformage sous vide, de telle manière que les plaques de matière plastique (8) soient attirées dans les moitiés de moule respectives (2, 4, 6, 7) par une dépression.

12. Dispositif selon la revendication 1, **caractérisé en ce que** la deuxième moitié de moule (4) et la troisième moitié de moule (6) sont disposées sur des côtés opposés du bras pivotant (3), de telle manière que les ouvertures des moitiés de moule (4, 6) soient respectivement orientées à l'opposé du bras pivotant (3).

13. Procédé de fabrication de récipients en plastique, dans lequel on place des plaques de matière plastique chauffées (8) dans une première moitié de moule ouverte vers le haut (2) et dans une deuxième moitié de moule ouverte vers le haut (4) et on opère le thermoformage des plaques de matière plastique (8) en demi-coquilles de matière plastique dans la première et dans la deuxième moitié de moule (2, 4), dans lequel la première moitié de moule (2) est disposée sur une première table de presse (1) et la deuxième moitié de moule (4) est disposée sur un bras pivotant (3), dans lequel le bras pivotant (3) se trouve d'abord dans une deuxième position dans laquelle la première et la deuxième moitié de moule (2, 4) sont disposées l'une à côté de l'autre et sont ouvertes vers le haut, dans lequel on amène le bras pivotant (3) dans une première position au-dessus de la première table de presse (1), dans laquelle la première et la deuxième moitié de moule (2, 4) sont ouvertes l'une vers l'autre, dans lequel on soude ensuite l'une à l'autre, en pressant la première moitié de moule (2) sur la deuxième moitié de moule (4), les demi-coquilles de matière plastique contenues dans celles-ci par leurs bords qui se chevauchent, **caractérisé en ce que** l'on place ensuite des plaques de matière plastique chauffées (8) dans une troisième moitié de moule ouverte vers le haut (6) et dans une quatrième moitié de moule ouverte par le haut (7) et on opère dans la troisième et dans la quatrième moitié de moule (6, 7) le thermoformage des plaques de matière plastique (8) en demi-coquilles de matière plastique, dans lequel la troisième moitié de moule (6) est disposée sur une deuxième table de presse (5) et la quatrième moitié de moule (7) est disposée sur le bras pivotant (3), dans lequel on amène le bras pivotant (3) dans la deuxième position au-dessus de la deuxième table de presse (5), dans laquelle la troisième et la quatrième moitié de moule (6, 7) sont ouvertes l'une vers l'autre, dans lequel on soude ensuite l'une à l'autre, en pressant la troisième moitié de moule (6) sur la quatrième moitié de moule (7), les demi-coquilles de matière plastique contenues dans celles-ci par leurs bords qui se chevauchent, dans lequel le mouvement de pivotement du bras pivotant (3) entre la première et la deuxième position est assisté par un dispositif à ressort (12), qui utilise le poids du bras pivotant (3) pour le levage du bras pivotant (3).

14. Procédé selon la revendication 13, **caractérisé en ce que** les plaques de matière plastique placées dans la première moitié de moule (2) et/ou dans la deuxième moitié de moule (4) et/ou facultativement dans la troisième moitié de moule (6) et/ou facultativement dans la quatrième moitié de moule (7) sont attirées dans les moitiés de moule respectives (2, 4, 6, 7) par une dépression en vue du thermoformage.
